# EUROPÄISCHE PATENTSCHRIFT

(11) **EP 3 986 662 B1**
(45) Veröffentlichungstag und Bekanntmachung des Hinweises auf die Patenterteilung: **23.08.2023**
(21) Anmeldenummer: 20743064.6
(22) Anmeldetag: 17.06.2020
(51) Int. Cl.: G01N 21/95

(54) **VERFAHREN ZUR KONTROLLE UND NACHARBEITUNG EINES WERKSTÜCKES MIT EINER LASERGESCHNITTENEN GESCHLOSSENEN INNENKONTUR**
METHOD FOR INSPECTING AND POST-PROCESSING A WORKPIECE HAVING A LASER-CUT, CLOSED INNER CONTOUR
PROCÉDÉ DE CONTRÔLE ET DE POST-TRAITEMENT D'UNE PIÈCE PRÉSENTANT UN CONTOUR INTÉRIEUR FERMÉ DÉCOUPÉ PAR LASER

(30) Priorität: 20.06.2019 DE 102019116735
(43) Veröffentlichungstag der Anmeldung: 27.04.2022
(73) Patentinhaber: JENOPTIK Automatisierungstechnik GmbH, 07745 Jena (DE)
(72) Erfinder: REICHL, Torsten, 07745 Jena (DE); MICHEL-TRILLER, Robert, 07745 Jena (DE)
(74) Vertreter: Gleim Petri Patent- und Rechtsanwaltspartnerschaft mbB
(86) Internationale Anmeldenummer: PCT/DE2020/100508
(87) Internationale Veröffentlichungsnummer: WO 2020/253914

(56) Entgegenhaltungen:
- EP-A1- 3 159 093
- DE-A1-102010 039 525
- DE-A1-102011 004 117
- DE-B3-102016 220 459

## Beschreibung

Aus dem Stand der Technik sind eine Vielzahl von Off-line- oder Postprozessverfahren bekannt, bei denen die Bearbeitungsqualität eines Laserschneidprozesses nach Beendigung des Laserschneidprozesses beurteilt wird. Dabei werden verschiedene Merkmale der Schnittqualität bzw. des geschnittenen Produktes beurteilt.

Aus der EP 3 159 093 B1 ist ein Verfahren zur Kontrolle von Ergebnissen von Laserschneidvorgängen bekannt, bei dem nach Unterbrechung und/oder dem Abschluss eines mit vorgegebenen Schneidparametern durchgeführten Laserschneidvorganges automatisiert eine Qualitätskontrolle durchgeführt wird. Dabei wird zumindest eine Teilstrecke der Schnittkontur gescannt und auf Basis der Scanergebnisse wird automatisch mindestens ein Qualitätsmerkmal des Bearbeitungsergebnisses bestimmt und mit vordefinierten Qualitätsmerkmalen verglichen. Je nach Resultat des Vergleiches wird mindestens entweder eine Fehlermeldung ausgegeben, der Schneidvorgang abgebrochen, mindestens ein Schneidparameter angepasst, die Schnittkontur wenigstens teilweise nachgearbeitet oder der Laserschneidvorgang fortgesetzt, sofern er zur Kontrolle unterbrochen wurde. Die hier konkret bestimmten Qualitätsmerkmale umfassen einen Schlackerückstand in einem Schnittspalt entlang der Schnittkontur, eine Schnittspaltbreite und eine Schnittkantenrauheit.

In vielen Fällen, bei denen an Werkstücken Schnittkonturen mittels Laser hergestellt werden, sind die unmittelbaren Merkmale der entstehenden Schnittkontur, wie eine geringe Schnittkantenrauheit, ein exakter Konturenverlauf oder eine vollständig durch das Werkstück verlaufende Schnittkontur, nicht das eigentliche Ziel. Häufig umschreibt die Schnittkontur (geschlossene Innenkontur) einen Teil des Werkstückes (Schneidbutzen), der aus dem Werkstück herausgetrennt werden soll. Das heißt, letztendlich kommt es nur darauf an, dass ein von der Schnittkontur umschlossener Schneidbutzen, der ein Gutteil oder Abfall sein kann, auch tatsächlich aus dem Werkstück entfernt wurde.

So ist aus der DE 10 2011 004 117 A1 ein Verfahren bekannt, bei dem nach dem Schneiden einer kleinen Innenkontur der Schneidkopf, mit dem die Innenkontur geschnitten wurde, in deren Mitte positioniert wird und durch ein erneutes Einstechen des Laserstrahls gegebenenfalls aus entstehenden Emissionen, wie sie beim Laserschneiden in Wechselwirkung mit dem Material des Werkstückes entstehen, darauf geschlossen wird, dass der von der Innenkontur umschlossene Schneidbutzen nicht herausgefallen ist.

Ein ähnliches Verfahren ist in der DE 10 2010 039 525 A1 angegeben, wonach die Anwesenheit des von einer geschnittenen Innenkontur umschlossenen Schneidbutzens mit dem Abstandssensor der Schneiddüse überprüft wird.

Die beiden letztgenannten Verfahren haben den Nachteil, dass die Kontrolle des Werkstückes in einer Aufspannung und dem Schneidkopf, bzw. der Schneiddüse zugeordnet, erfolgt, wie sie während des Laserschneidprozesses gegeben war. Das heißt, die Vorrichtung, in der der Laserschneidprozess durchgeführt wurde, bleibt zumindest für die Zeitdauer, in der die Überprüfung stattfindet, für die Durchführung weiterer Laserschneidprozesse blockiert.

Es ist die Aufgabe der Erfindung ein Verfahren zur automatischen Kontrolle und Nacharbeitung von Werkstücken, an denen eine geschlossene Innenkontur mit Laser geschnitten wurde, zu finden, das nach dem Laserschneidprozess sowie unabhängig von diesem und den hier verwendeten Handlingeinrichtungen durchgeführt werden kann.

Diese Aufgabe wird mit einem Verfahren gemäß dem Anspruch 1 gelöst. Vorteilhafte Ausführungen sind in den rückbezogenen Unteransprüchen 2 - 7 angegeben.

Das grundsätzlich fertig bearbeitete Werkstück wird durch einen Greifer eines Handlingroboters aufgenommen bzw. an diesen übergeben. Dabei befindet sich der Greifer in einer vorbestimmten Aufnahmeposition AP und das Werkstück nimmt eine vorbekannte Relativlage bezogen auf den Greifer ein.

Die spätere Beschreibung eines erfindungsgemäßen Verfahrens erfolgt der Einfachheit halber für die Kontrolle (Inspektion) und eventuelle Nacharbeitung eines Werkstückes mit nur einer Innenkontur. Zur Kontrolle und eventuellen Nacharbeitung weiterer Innenkonturen werden die einzelnen Verfahrensschritte analog wiederholt, wobei für verschiedene Innenkonturen verschiedene erste und zweite Greiferpositionen abgespeichert sind und vom Greifer eingenommen werden. Falls das Werkstück für die Kontrolle weiterer Innenkonturen nicht in der selben Relativlage zum Greifer durch diesen gehalten werden kann, wird der Greifer zurück in die Aufnahmeposition bewegt und das Werkstück wird definiert abgelegt. Es wird dann aus einer anderen vorbestimmten Aufnahmeposition, die der Greifer einnimmt, erneut gegriffen, um die zuvor nicht optisch kontrollierbare Innenkontur zu inspizieren.

Die Koordinaten der zu inspizierenden Kontrollpunkte werden bezogen auf den Greifer vor dem Verfahren erfasst und als Soll-Koordinaten abgespeichert. Die Erfassung kann anhand eines Musterwerkstückes oder aus den Konstruktionsunterlagen abgeleitet erfolgen.

Es ist erfindungswesentlich, dass der Greifer automatisch gesteuert zwischen einer vorbestimmten Aufnahmeposition, in der er das Werkstück definiert und reproduzierbar aufnimmt, einer vorbestimmtem ersten Greiferposition, in der er das Werkstück definiert und reproduzierbar einer Inspektionseinheit zustellt, und gegebenenfalls einer vorbestimmten zweiten Greiferposition, in der das Werkstück definiert und reproduzierbar einer Ausdrückeinheit zustellt, bewegt wird. Die Aufnahmeposition und die beiden Greiferpositionen wurden zuvor einer mit dem Handlingroboter verbundenen Steuereinheit angelernt.

Das Verfahren findet nach Abschluss und losgelöst von dem eigentlichen Laserschneidverfahren statt, sodass das eigentliche Laserschneidverfahren durch die Kontrolle und eventuelle Nacharbeit unter Verwendung der während des Laserschneidverfahrens genutzten Handlingeinrichtung nicht verlängert wird. Damit wird die Fertigungsstrecke, auf der das Laserschneidverfahren durchgeführt wird, nicht unnötig blockiert und die Kontrolle und gegebenenfalls erforderliche Nacharbeit eines Werkstückes kann parallel zum Bearbeiten eines anderen Werkstückes erfolgen.

Die Erfindung soll nachfolgend anhand eines Ausführungsbeispiels und Zeichnungen näher erläutert werden.

Hierzu zeigen:

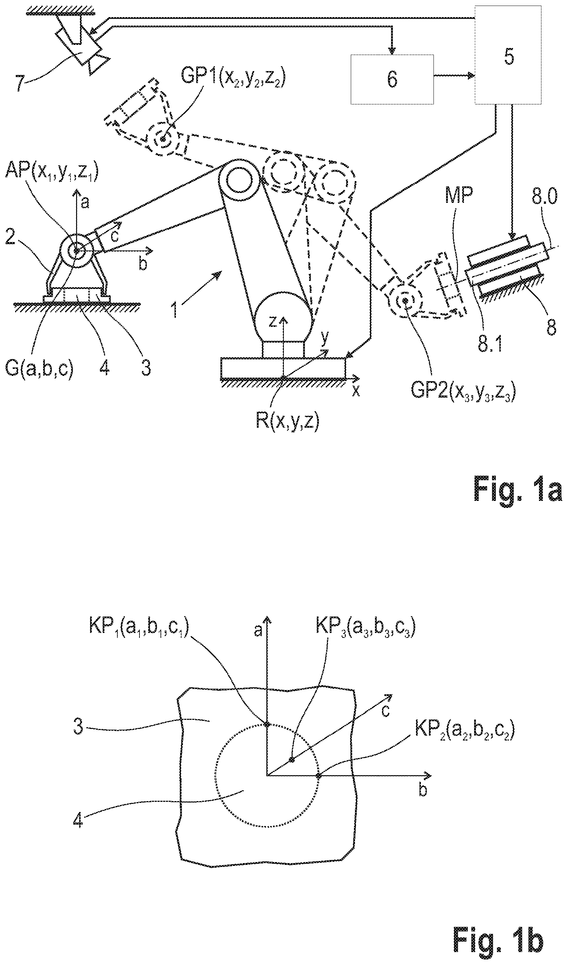

- Fig. 1a: eine Prinzipskizze eines Handlingroboters mit einem Greifer, der sich in einer Aufnahmeposition, einer ersten oder einer zweiten Greiferposition alternativ befindet und
- Fig. 1b: eine Teildarstellung eines Werkstückes in Draufsicht.

Mit dem erfindungsgemäßen Verfahren wird an einem Werkstück 3 mit einer lasergeschnittenen geschlossenen Innenkontur 4 optisch geprüft (inspiziert), ob sich ein durch das Laserschneiden der Innenkontur 4 ausgebildeter und somit durch die Innenkontur 4 begrenzter Schneidbutzen noch innerhalb des Werkstückes 3 befindet.

Erfindungsgemäß wird das Werkstück 3 durch einen Greifer 2 eines Handlingroboters 1 definiert aufgenommen, das heißt jedes Werkstück 3 wird bezogen auf den Greifer 2 und ein am Greifer gedachtes Greifer-Koordinatensystem G (a, b, c) in einer gleichen Relativlage zum Greifer 2 aufgenommen und von diesem gehalten. Der Greifer 2 befindet sich dabei in einer reproduzierbaren vorbestimmten Aufnahmeposition AP (x_{1,} y₁, z₁) bezogen auf ein Roboter-Koordinatensystem R (x, y, z). Damit hat auch die zuvor geschnittene geschlossene Innenkontur 4 des Werkstückes 3 eine definierte Relativlage zum Greifer 2. Der Greifer 2 selbst kann über eine Steuereinheit 5 des Handlingroboters 1 innerhalb eines begrenzten Aktionsradius eine beliebige Raumlage und Ausrichtung bezogen auf ein durch den Handlingroboter 1 definiertes Roboter-Koordinatensystem R (x, y, z) einnehmen, wird aber während des Verfahrens nur in eine vorbestimmte erste Greiferposition GP1 (x₂, y₂, z₂) und eine vorbestimmte zweite Greiferposition GP2 (x₃, y₃, z₃) gebracht.

Die erste und die zweite Greiferposition GP1 (x₂, y₂, z₂), GP2 (x₃, y₃, z₃) werden vor Verfahrensbeginn bevorzugt mittels eines Musterwerkstückes ermittelt. Zur Ermittlung der ersten Greiferposition GP1 (x₂, y₂, z₂) wird das vom Greifer 2 gehaltene Werkstück 3 vor der Inspektionseinheit 7 so positioniert, dass diese in der Lage ist, dessen Soll-Innenkontur und deren Relativlage am Werkstück 3 zu erkennen. Die Form und die Relativlage der Soll-Innenkontur wird bezogen auf den Greifer 2 und die aktuelle Greiferposition, die jetzt die erste Greiferposition GP1 (x₂, y₂, z₂) darstellt, abgespeichert. Bezogen auf den Greifer 2 bleibt die Relativlage der Soll-Innenkontur unverändert, während sie sich mit der Bewegung des Greifers 2 bezogen auf das Roboter-Koordinatensystem R (x, y, z) verändert. Über die Kenntnis der Raumlage und der Ausrichtung des Greifers 2 ist folglich jeweils auch die Raumlage der Innenkontur 4 des Werkstückes 3 bezogen auf das Roboter-Koordinatensystem R (x, y, z) bekannt, wenn die Relativlage der Innenkontur 4 bezogen auf das Werkstück 3 bekannt ist.

Vorteilhaft kann die Relativlage der Innenkontur 4 bezogen auf das Werkstück 3 und damit auf den Greifer 2 neben der Erfassung an einem Musterwerkstück auch durch die Bestimmung anhand der Konstruktionsunterlagen erfolgt und als Soll-Innenkontur in einer Speicher - und Recheneinheit 6 abgespeichert sein. Vorteilhaft wurden hierzu nur einzelne Kontrollpunkte auf der Innenkontur KP1 (a₁, b₁, c₁), KP2 (a₂, b₂, c₂) erfasst und abgespeichert, da es grundsätzlich nicht der exakten Kenntnis der Form und der Lage der Soll-Innenkontur - bedarf. Auch wurde abgespeichert welche Soll-Werte die Inspektionseinheit 7 für ausgewählte Kontrollpunkte innerhalb der Innenkontur KP3 (a₃, b₃, c₃) bei einem vollständig herausgelösten Werkstück 3 erfasst. Zwingend muss so ein Soll-Wert wenigstens für einen Kontrollpunkt innerhalb der Innenkontur -KP3 (a₃, b₃, c₃) erfasst und abgespeichert worden sein.

Grundsätzlich kann angenommen werden, dass die Innenkontur 4 der zu kontrollierenden Werkstücke (Ist-Innenkontur) zumindest in ihre Relativlage bezogen auf das Werkstück 3 mit der Innenkontur 4 des Musterwerkstückes (Soll-Innenkontur) übereinstimmt bzw. die Toleranz hierzu unwesentlich ist, zumal die Inspektion nur eines Kontrollpunktes innerhalb der Innenkontur KP3 (a₃, b₃, c₃) grundsätzlich ausreichend ist. Mit dieser Annahme kann der Greifer 2 zur Inspektion der Ist-Innenkontur des Werkstückes 3 in der anhand des Musterwerkstückes ermittelten ersten Greiferposition GP1 (x₂, y₂, z₂) positioniert werden und der wenigstens eine ausgewählte Kontrollpunkt innerhalb der Ist-Innenkontur KP3 (a₃, b₃, c₃) inspiziert werden. Lage- und Formabweichungen der Ist-Innenkontur gegenüber der Soll-Innenkontur führen dazu, dass die Lage der ausgewählten Kontrollpunkte bezogen auf die Innenkontur Lageabweichungen aufweisen.

Damit Form- und insbesondere Lageabweichungen einer Ist-Innenkontur gegenüber einer Soll-Innenkontur keinen Einfluss auf das Inspektionsergebnis eines Kontrollpunktes innerhalb der Innenkontur KP3 (a₃, b₃, c₃) haben, wird vorteilhaft ein wenigstens nahezu mittig liegender Kontrollpunkt inspiziert und das dem Kontrollpunkt zugeordnete Inspektionsergebnis, das einen Ist-Wert darstellt, wird mit dem abgespeicherten Soll-Wert verglichen.

Das Verfahrens beginnt mit der Aufnahme des Werkstückes 3, wobei sich der Greifer 2, wie bereits erklärt, in einer vorbestimmten Aufnahmeposition AP (x₁, y₁, z₁) befindet. Danach wird der Greifer 2 in eine vorbestimmte erste Greiferposition GP1 (x₂, y₂, z₂) zu einer optischen Inspektionseinheit 7 bewegt. Die Raumlage der Inspektionseinheit 7 bezogen auf das Roboter-Koordinatensystem R (x, y, z) ist bekannt, sodass einzelne Inspektionsergebnisse ortsaufgelöst jeweils einem Kontrollpunkt mit seinen Koordinaten bezogen auf das Greifer-Koordinatensystem G (a, b, c) aber auch bezogen auf das Roboter-Koordinatensystem R (x, y, z) zugeordnet werden können. Das Werkstück 3 wird an dem wenigstens einen Kontrollpunkt innerhalb der Innenkontur KP3 (a₃, b₃, c₃) inspiziert. Das heißt, das Werkstück 3 wird entweder nur an dem wenigstens einen Kontrollpunkt innerhalb der Innenkontur KP3 (a₃, b₃, c₃) optisch geprüft, was z. B. möglich ist mit einem Laserscanner als Inspektionseinheit 7, der nur auf diesen wenigstens einen Kontrollpunkt gerichtet eine Messtrahlung aussendet oder es wird nur der Wert für den wenigstens einen Kontrollpunkt aus einer digitalen Aufnahme z. B. einer Kamera als Inspektionseinheit 7 abgespeichert und ausgewertet.

Das jeweils erhaltene Inspektionsergebnis wird den Koordinaten des jeweiligen Kontrollpunktes zugeordnet und als Ist-Wert in einer Speicher- und Recheneinheit 6 abgespeichert.

Der Ist-Wert wird mit dem abgespeicherten Soll-Wert verglichen und bei einer über eine Toleranzgrenze hinausgehenden Abweichung des Ist-Wertes vom Soll-Wert wird der Greifer 2 durch die Steuereinheit 5 angesteuert, in die zweite Greiferposition GP2 (x₃, y₃, z₃) gebracht, wobei er einer Ausdrückeinheit 8 mit einem Stempel 8.1 so zugestellt wird, dass die Stempelachse 8.0 des Stempels 8.1 in den Flächenmittelpunkt MP der Innenkontur 4 gerichtet ist und der Stempel 8.1 in Richtung der Stempelachse 8.0, die durch den Flächenmittelpunkt MP verläuft, bewegt wird. Dabei wird der Stempel 8.1 durch die Innenkontur 4 hindurch bewegt und ein gegebenenfalls noch in der Innenkontur 4 befindlicher Schneidbutzen wird herausdrückt.

Vorteilhaft wird als Inspektionseinheit 7 eine Kamera verwendet, die eine zweidimensionale Abbildung von dem Werkstück 3 erzeugt, wobei der dem wenigstens einen Kontrollpunkt innerhalb der Innenkontur KP3 (a₃, b₃, c₃) zugeordnete Ist-Wert der Wert einer Lichtintensität der Abbildung dieses Kontrollpunktes innerhalb der Innenkontur KP3 (a₃, b₃, c₃) ist.

Alternativ wird vorteilhaft als Inspektionseinheit 7 ein Laserscanner verwendet, der das Werkstück 3 wenigstens eindimensional abscannt, wobei der dem wenigstens einen Kontrollpunkt innerhalb der Innenkontur KP3 (a₃, b₃, c₃) zugeordnete Ist-Wert der Wert einer Entfernung des Werkstückes 3 oder einer dahinter befindlichen Fläche von der Inspektionseinheit 7 ist.

Vorteilhaft wird auch die Innenkontur 4 des Werkstückes 3, die eine Ist-Innenkontur darstellt, zusätzlich von der Inspektionseinheit 7 inspiziert und das Inspektionsergebnis wird mit dem Inspektionsergebnis einer zuvor inspizierten Soll-Innenkontur eines Musterwerkstückes verglichen. Bei Feststellung einer Lageabweichung der Ist-Innenkontur von der Soll-Innenkontur wird vorteilhaft die vorbestimmte zweite Greiferposition GP2 (x₃, y₃, z₃) korrigiert. Damit wird die Stempelachse 8.0 nicht durch den Flächenmittelpunkt MP der Soll-Innenkontur sondern durch den Flächenmittelpunkt MP der Ist-Innenkontur geführt. Das hat den Vorteil, dass die an die Innenkontur 4 angepasste Außenkontur des Stempels 8.1 mit einem kleineren Spiel zur Innenkontur 4 dimensioniert werden kann, was eine großflächigere Anlage an einen eventuell noch vorhandenen Schneidbutzen ermöglicht.

Eine Lageabweichung der Ist-Innenkontur von der Soll-Innenkontur ist mit anderen Worten eine Abweichung einer Ist-Lage der Innenkontur von einer Soll-Lage gegenüber dem Greifer 2. Diese kann verschiedene Ursachen haben. Zum einen kann sich die Innenkontur gegenüber der Außenkontur des Werkstückes 3 in einer von einer Soll-Lage abweichenden Ist-Lage befinden. Zum anderen kann eine solche Lageabweichung entstehen, indem das Werkstück 3 bei der Aufnahme durch den Greifer 2 bezogen auf das Greifer-Koordinatensystem G (a, b, c) eine von einer Soll-Lage abweichende Ist-Lage einnimmt. Indem die Lage der Ist-Innenkontur, also deren reale Relativlage zum Greifer-Koordinatensystem G (a, b, c) inspiziert wird und im Falle einer außer Toleranz liegenden Abweichung von einer Soll-Innenkontur, also der beabsichtigten Relativlage zum Greifer-Koordinatensystem G (a, b, c), die zweite Greiferposition GP2 (x₃, y₃, z₃) korrigiert wird, können Fertigungstoleranzen beim Schneiden der Innenkontur und Toleranzen bei der Aufnahme des Werkstückes 3 ausgeglichen werden.

Vorteilhaft wird der Greifer 2 im Anschluss an eine gegebenenfalls durchgeführte Nacharbeit aus der zweiten Greiferposition GP2 (x₃, y₃, z₃) zurück in die erste Greiferposition GP1 (x₂, y₂, z₂) geführt und das Werkstück 3 wird erneut inspiziert.

### Bezugszeichenliste

- 1: Handlingroboter
- 2: Greifer
- 3: Werkstück
- 4: Innenkontur
- 5: Steuereinheit
- 6: Speicher- und Recheneinheit
- 7: Inspektionseinheit
- 8: Ausdrückeinheit
- 8.0: Stempelachse
- 8.1: Stempel

- R (x, y, z): Roboter-Koordinatensystem
- G (a, b, c): Greifer-Koordinatensystem
- KP1 (a₁, b₁, c₁), KP2 (a₂, b₂, c₂): Kontrollpunkte auf der Innenkontur
- KP3 (a₃, b₃, c₃): Kontrollpunkt innerhalb der Innenkontur
- AP (x₁, y₁, z₁): Aufnahmeposition
- GP1 (x₂, y₂, z₂): erste Greiferposition
- GP2 (x₃, y₃, z₃): zweite Greiferposition
- MP: Flächenmittelpunkt

## Patentansprüche

1. Verfahren zur Kontrolle und Nacharbeitung eines Werkstückes (3) mit einer lasergeschnittenen geschlossenen Innenkontur (4), bei dem optisch geprüft wird, ob sich ein durch das Schneiden der Innenkontur (4) gebildeter Schneidbutzen noch innerhalb des Werkstückes (3) befindet,
indem das Werkstück (3) an wenigstens einem Kontrollpunkt innerhalb der Innenkontur (KP3 (a₃, b₃, c₃)) inspiziert wird und ein dem wenigstens einen Kontrollpunkt (KP3 (a₃, b₃, c₃)) zugeordnetes Inspektionsergebnis einen Ist-Wert darstellt, der mit einem Soll-Wert verglichen wird, **dadurch gekennzeichnet, dass** das Werkstück (3) durch einen Greifer (2) eines Handlingroboters 1 definiert aufgenommen wird, wobei ein definiertes Aufnehmen bedeutet, dass jedes Werkstück bezogen auf den Greifer (2) und ein am Greifer (2) definiertes Greifer-Koordinatensystem (G(a,b,c)) in einer gleichen Relativlage zum Greifer (2) aufgenommen und gehalten wird, und damit die Innenkontur (4) des Werkstückes (3) eine definierte Relativlage bezogen auf das am Greifer (2) definierte Greifer-Koordinatensystem (G (a, b, c)) einnimmt, und sich der Greifer (2) mit dem Koordinatenursprung des Greifer-Koordinatensystems (G (a, b c)) in einer vorbestimmten Aufnahmeposition (AP (x₁, y₁, z₁)), in einem durch den Handlingroboter 1 definierten Roboter-Koordinatensystem (R (x, y, z)), befindet,
der Greifer (2) in eine erste vorbestimmte Greiferposition (GP1 (x₂, y₂, z₂)) zu einer optischen Inspektionseinheit (7) bewegt wird, die eine bekannte Raumlage, bezogen auf das Roboter-Koordinatensystem (R (x, y, z)) aufweist und das Werkstück (3) an dem wenigstens einen Kontrollpunkt innerhalb der Innenkontur (KP3 (a₃, b₃, c₃)) inspiziert wird,
und bei einer über eine Toleranzgrenze hinausgehenden Abweichung des Ist-Wertes von dem Soll-Wert der Greifer (2) in eine vorbestimmte zweite Greiferposition (GP2 (x3, y3, z3)), einer Ausdrückeinheit (8) mit einem Stempel (8.1) so zugestellt wird, dass eine Stempelachse (8.0) des Stempels (8.1) durch den Flächenmittelpunkt (MP) der Innenkontur (4) gerichtet ist und der Stempel (8.1) in Richtung der Stempelachse (8.0) bewegt wird, wobei der Stempel (8) durch die Innenkontur (4) hindurch bewegt wird und einen sich gegebenenfalls noch in der Innenkontur (4) befindenden Schneidbutzen herausdrückt, womit die Nacharbeitung erfolgt.

2. Verfahren nach Anspruch 1, **dadurch gekennzeichnet,**
**dass** als Inspektionseinheit (7) eine Kamera verwendet wird, die eine zweidimensionale Abbildung von dem Werkstück (3) erzeugt, wobei der dem wenigstes einen Kontrollpunkt innerhalb der Innenkontur (KP3 (a₃, b₃, c₃)) zugeordnete Ist-Wert der Wert einer Lichtintensität der Abbildung dieses Kontrollpunktes ist.

3. Verfahren nach Anspruch 1, **dadurch gekennzeichnet,**
**dass** als Inspektionseinheit (7) ein Laserscanner verwendet wird, der das Werkstück (3) wenigstens eindimensional abscannt, wobei der dem wenigstes einen Kontrollpunkt innerhalb der Innenkontur (KP3 (a₃, b₃, c₃)) zugeordnete Ist-Wert der Wert einer Entfernung des Werkstückes oder einer dahinter befindlichen Fläche von der Inspektionseinheit (7) ist.

4. Verfahren nach Anspruch 1, **dadurch gekennzeichnet,**
**dass** die vorbestimmt erste und zweite Greiferposition (GP1 (x₂, y₂, z₂)), (GP2 (x₃, y₃, z₃)) unter Verwendung eines Musterwerkstückes mit einer Soll-Innenkontur bestimmt und abgespeichert wurden.

5. Verfahren nach Anspruch 1, **dadurch gekennzeichnet,**
**dass** die Innenkontur (4), die eine Ist-Innenkontur darstellt, zusätzlich von der Inspektionseinheit (7) inspiziert wird und das Inspektionsergebnis mit dem Inspektionsergebnis einer zuvor inspizierten Soll-Innenkontur eines Musterwerkstückes verglichen wird.

6. Verfahren nach Anspruch 5, **dadurch gekennzeichnet,**
**dass** bei einer Lageabweichung der Ist-Innenkontur von der Soll-Innenkontur die zweite Greiferposition (GP2 (x₃, y₃, z₃)) korrigiert wird.

7. Verfahren nach Anspruch 1, **dadurch gekennzeichnet,**
**dass** der Greifer (2) im Anschluss an eine gegebenenfalls durchgeführte Nacharbeit aus der zweiten Greiferposition (GP2 (x₃, y₃, z₃)) zurück in die erste Greiferposition (GP1 (x₂, y₂, z₂)) geführt und das Werkstück (3) erneut inspiziert wird.

## Claims

1. A method for inspecting and post-processing a workpiece (3) having a laser-cut closed inner contour (4), said method comprising optically checking whether a slug formed by the cutting of the inner contour (4) is still located within the workpiece (3),
the workpiece (3) being inspected in at least one control point within the inner contour (KP3 (a₃, b₃, c₃)) and an inspection result associated with the at least one control point (KP3 (a₃, b₃, c₃)) representing an actual value, which is compared with a nominal value, **characterized in that** the workpiece (3) is picked up by a gripper (2) of a handling robot (1) in a defined manner, wherein a defined pick-up means that, with respect to the gripper (2) and a gripper coordinate system (G(a,b,c)) defined on the gripper (2), each workpiece is picked up and held in an equal relative position to the gripper (2), and thereby the inner contour (4) of the workpiece (3) assumes a defined relative position with respect to the gripper coordinate system (G (a, b, c)) defined on the gripper (2), and the gripper (2) is located with the coordinate origin of the gripper coordinate system (G (a, b c)) in a predetermined pick-up position (AP (x₁, y₁, z₁)), in a robot coordinate system (R (x, y, z)) defined by the handling robot (1),
the gripper (2) is moved to a first predetermined gripper position (GP1 (x₂, y₂, z₂)) with respect to an optical inspection unit (7) having a known spatial position relative to the robot coordinate system (R (x, y, z)) and the workpiece (3) is inspected at the at least one control point within the inner contour (KP3 (a₃, b₃, c₃)),
and, if a deviation of the actual value from the desired value exceeds a tolerance limit, the gripper (2) is moved to a predetermined second gripper position (GP2 (x₃, y₃, z₃)), towards an ejection unit (8) with a ram (8.1) in such a way that a ram axis (8.0) of the ram (8.1) is directed through the area center point (MP) of the inner contour (4) and the ram (8.1) is moved in the direction of the ram axis (8.0), the ram (8) being moved through the inner contour (4) and pushing out any slug still located in the inner contour (4), whereby the post-processing takes place.

2. The method according to claim 1, **characterized in that**
a camera that generates a two-dimensional image of the workpiece (3) is used as the inspection unit (7), with the actual value assigned to the at least one control point within the inner contour (KP3 (a₃, b₃, c₃)) being the value of a light intensity of the image of said control point.

3. The method according to claim 1, **characterized in that**
a laser scanner is used as the inspection unit (7), which scans the workpiece (3) at least one-dimensionally, with the actual value assigned to the at least one control point within the inner contour (KP3 (a₃, b₃, c₃)) being the value of a distance of the workpiece, or of a surface located behind it, from the inspection unit (7).

4. The method according to claim 1, **characterized in that**
the predetermined first and second gripper positions (GP1 (x₂, y₂, z₂)), (GP2 (x₃, y₃, z₃)) were determined and stored using a sample workpiece with a nominal inner contour.

5. The method according to claim 1, **characterized in that**
the inner contour (4), which represents an actual inner contour, is additionally inspected by the inspection unit (7) and the inspection result is compared with the inspection result of a previously inspected nominal inner contour of a sample workpiece.

6. The method according to claim 5, **characterized in that**,
in the case of a positional deviation of the actual inner contour from the nominal inner contour, the second gripper position (GP2 (x₃, y₃, z₃)) is corrected.

7. The method according to claim 1, **characterized in that**,
following any post-processing that may have been performed, the gripper (2) is guided from the second gripper position (GP2 (x₃, y₃, z₃)) back to the first gripper position GP1 ((x₂, y₂, z₂)) and the workpiece (3) is inspected again.

## Revendications

1. Procédé de contrôle et de post-traitement d'une pièce (3) présentant un contour intérieur (4) fermé découpé par laser, dans lequel on vérifie optiquement si un déchet de coupe formé par la découpe du contour intérieur (4) se trouve encore à l'intérieur de la pièce (3),
en inspectant la pièce (3) en au moins un point de contrôle à l'intérieur du contour intérieur (KP3 (a₃, b₃, c₃)) et un résultat d'inspection associé audit au moins un point de contrôle (KP3 (a₃, b₃, c₃)) représente une valeur réelle qui est comparée à une valeur de consigne, **caractérisé en ce que** la pièce (3) est saisie de manière définie par un préhenseur (2) d'un robot de manipulation (1), une saisie définie signifiant que chaque pièce est saisie et maintenue, par rapport au préhenseur (2) et à un système de coordonnées de préhenseur (G(a, b, c)) défini sur le préhenseur (2), dans une même position relative par rapport au préhenseur (2), et ainsi le contour intérieur (4) de la pièce (3) prend une position relative définie par rapport au système de coordonnées de préhenseur (G(a, b, c)) défini sur le préhenseur (2), et le préhenseur (2) se trouve avec l'origine des coordonnées du système de coordonnées de préhenseur (G (a, b c)) dans une position de prise (AP (x₁, y₁, z₁)) prédéterminée, dans un système de coordonnées de robot (R (x, y, z)) défini par le robot de manipulation (1),
le préhenseur (2) est déplacé dans une première position de préhension prédéterminée (GP1 (x₂, y₂, z₂)), vers une unité d'inspection optique (7) ayant une position spatiale connue par rapport au système de coordonnées de robot (R (x, y, z)) et la pièce (3) est inspectée au niveau dudit au moins un point de contrôle à l'intérieur du contour intérieur (KP3 (a₃, b₃, c₃)),
et, en cas d'écart de la valeur réelle par rapport à la valeur de consigne dépassant une limite de tolérance, le préhenseur (2) est amené dans une deuxième position de préhension prédéterminée (GP2 (x₃, y₃, z₃)), vers une unité d'expression (8) avec un poinçon (8.1) de telle sorte qu'un axe de poinçon (8.0) du poinçon (8.1) est dirigé à travers le centre de surface (MP) du contour intérieur (4) et le poinçon (8.1) est déplacé en direction de l'axe de poinçon (8.0), le poinçon (8) étant déplacé à travers le contour intérieur (4) et expulsant un déchet de coupe se trouvant éventuellement encore dans le contour intérieur (4), ce qui permet d'effectuer le post-traitement.

2. Procédé selon la revendication 1, **caractérisé en ce que**
l'on utilise comme unité d'inspection (7) une caméra qui produit une image bidimensionnelle de la pièce (3), la valeur réelle associée audit au moins un point de contrôle à l'intérieur du contour intérieur (KP3 (a₃, b₃, c₃)) étant la valeur d'une intensité lumineuse de l'image de ce point de contrôle.

3. Procédé selon la revendication 1, **caractérisé en ce que**
l'on utilise comme unité d'inspection (7) un scanner laser qui balaye la pièce (3) au moins dans une dimension, la valeur réelle associée audit au moins un point de contrôle à l'intérieur du contour intérieur (KP3 (a₃, b₃, c₃)) étant la valeur d'une distance de la pièce ou d'une surface se trouvant derrière celle-ci par rapport à l'unité d'inspection (7).

4. Procédé selon la revendication 1, **caractérisé en ce que**
la première et la deuxième positions de préhension prédéterminées (GP1 (x₂, y₂, z₂)), (GP2 (x₃, y₃ , z₃)) ont été déterminées et mémorisées en utilisant une pièce modèle avec un contour intérieur de consigne.

5. Procédé selon la revendication 1, **caractérisé en ce que**
le contour intérieur (4), qui représente un contour intérieur réel, est inspecté en plus par l'unité d'inspection (7) et le résultat de l'inspection est comparé au résultat de l'inspection d'un contour intérieur de consigne inspecté auparavant d'une pièce modèle.

6. Procédé selon la revendication 5, **caractérisé en ce que**,
en cas d'écart de position du contour intérieur réel par rapport au contour intérieur de consigne, la deuxième position de préhension (GP2 (x₃, y₃, z₃)) est corrigée.

7. Procédé selon la revendication 1, **caractérisé en ce que**
le préhenseur (2) est ramené de la deuxième position de préhension (GP2 (x₃, y₃, z₃)) à la première position de préhension (GP1 (x₂, y₂, z₂)) à la suite d'un post-traitement éventuellement effectué et la pièce (3) est à nouveau inspectée.
